# EUROPÄISCHE PATENTSCHRIFT

(11) **EP 0 838 627 B1**
(45) Veröffentlichungstag und Bekanntmachung des Hinweises auf die Patenterteilung: **07.03.2001**
(21) Anmeldenummer: 97115669.0
(22) Anmeldetag: 10.09.1997
(51) Int. Cl.: F16L 55/24, F16L 55/10, E03C 1/08, B29C 45/24

(54) **Anschlusseinrichtung für ein wasserdurchströmtes Gerät**
Connecting arrangement for a water through-flow device
Dispositif de connexion pour appareil traversé par de l'eau

(30) Priorität: 12.09.1996 DE 19637100
(43) Veröffentlichungstag der Anmeldung: 29.04.1998
(73) Patentinhaber: Hansgrohe AG, 77761 Schiltach (DE)
(72) Erfinder: Schorn, Franz, 77761 Schiltach (DE); Blessing, Gerd, 78052 VS-Obereschach (DE)
(74) Vertreter: Patentanwälte Ruff, Beier und Partner

(56) Entgegenhaltungen:
- EP-A- 0 172 925
- DE-A- 2 658 742
- US-A- 4 743 365

## Beschreibung

Die Erfindung geht aus von einer Anschlußeinrichtung für ein wasserdurchströmtes Gerät. Eine solche Anschlußeinrichtung kann beispielsweise ein Wandanschlußbogen sein, der mit der Hauswasserleitung fest verbunden ist und an dem, beispielsweise mit Hilfe eines Gewindes, eine Handbrause mit Hilfe eines Brauseschlauchs angeschraubt werden kann. Die Handbrause stellt dann das wasserdurchströmte Gerät dar.

Auch der Anschluß der Handbrause an dem Ende des Brauseschlauchs kann als Anschlußeinrichtung für das wasserdurchströmte Gerät, nämlich die Handbrause, bezeichnet werden.

Auch die Anbringung eines Brauseschlauchs an einer Mischarmatur kann mit Hilfe einer Anschlußeinrichtung erfolgen.

Die Erfindung befaßt sich in erster Linie mit Anschlußeinrichtungen im Sanitärbereich, ist jedoch nicht auf diesen Bereich beschränkt.

Es ist bekannt, daß sich im Trinkwasser Ablagerungen befinden können, beispielsweise Kalkteilchen, die sich gebildet haben und sich dann lösen. Auch Sandteilchen und Rostteilchen können in dem Wasser vorhanden sein.

Bei sanitären Mischarmaturen sind häufig Siebe vorhanden, die in der Wasserleitung eingesetzt sind. Es handelt sich üblicherweise um ein Metallgeflecht, das eben ausgebildet ist und von dem Wasser durchströmt wird.

Ebenfalls bekannt ist es, zum Anschluß von Schläuchen Kombinationen aus Dichtungen und Sieben zu verwenden, wobei die Sieböffnungen in dem gummiartigen Material der Dichtung enthalten sind.

Alle diese bekannten Siebe halten zwar die Partikel zurück, erfordern jedoch einen hohen Aufwand zu ihrer Säuberung. In der Regel muß die Anschlußeinrichtung aufgeschraubt und das Sieb entnommen werden, was sich unter Umständen schwierig gestalten kann. Dann muß das herausgenommene Sieb gereinigt, gegebenenfalls auch entkalkt werden.

Es ist bereits ein Schmutzfilter für thermoplastische Medien bekannt (EP 172 925 A1) bei dem in einem Filterraum ein Sperrkörper angeordnet ist, der zwischen einer Säuberungsstellung und einer Filterstellung verschiebbar ist. Im Normalfall wird er durch eine Madenschraube in der Filterstellung gehalten. Die Madenschraube kann gelöst werden, um den Sperrkörper in die Säuberungsstellung zu bewegen.

Ebenfalls bekannt ist eine Ventilfiltereinheit (US-4 743 365), bei der das Wasser durch die Öffnungen eines Siebes fließt. Wenn sich die Öffnungen verstopfen, kann das Sieb durch die Wasserströmung verschoben werden, so dass das Wasser dann an der Außenseite vorbeifließt und dabei Verunreinigungen mitnimmt.

Der Erfindung liegt die Aufgabe zugrunde, eine Anschlußeinrichtung für ein wasserdurchströmtes Gerät zu schaffen, bei dem sich das Säubern des Siebs einfacher gestalten läßt.

Zur Lösung dieser Aufgabe schlägt die Erfindung eine Anschlußeinrichtung mit den im Anspruch 1 aufgeführten Merkmalen vor. Weiterbildungen der Erfindung sind Gegenstand von Unteransprüchen.

Bei der von der Erfindung vorgeschlagenen Anschlußeinrichtung ist es also nicht mehr erforderlich, das eigentliche Siebelement auszubauen, sondern es reicht aus, den Anschluß des wasserdurchströmten Geräts an der Anschlußeinrichtung zu lösen, worauf das Siebelement dann in die Säuberungsstellung beaufschlagt werden kann. In dieser Säuberungsstellung ist die eigentliche Siebfläche so zugänglich, daß die dort vorhandenen Teilchen entfernt werden können, beispielsweise durch einfaches Abschütteln oder Abbürsten. Anschließend kann das wasserdurchströmte Gerät wieder angeschlossen werden. Das Siebelement kann nicht verlorengehen.

Eine Möglichkeit, wie das Siebelement in die Säuberungsstellung beaufschlagt werden kann, besteht darin, daß es durch sein eigenes Gewicht beaufschlagbar ist. Je nach Haltung des Elements, in dem das Siebelement gelagert ist, kann man das Siebelement also in die Säuberungsstellung bringen.

Eine zweite Möglichkeit, das Sieb zu säubern, besteht darin, daß dieses durch Federkraft in seine Säuberungsstellung beaufschlagbar ist. Da hierzu keine großen Kräfte erforderlich sind, reicht eine sehr leichte und kleine Feder aus.

Eine weitere, von der Erfindung bevorzugte Möglichkeit besteht darin, das Siebelement so auszugestalten, daß es durch den Druck des durch das Anschlußelement fließenden Wassers beaufschlagbar ist. Diese Möglichkeit hat den Vorteil, daß keine zusätzlichen Elemente benötigt werden. Nach Lösen des Anschlusses wird das Wasser einfach nochmal kurz aufgedreht, so daß das Siebelement in seine Säuberungsstellung gelangt. Diese Möglichkeit ist insbesondere dann von Vorteil, wenn, wie die Erfindung in Weiterbildung vorschlägt, die Säuberungsstellung derart ausgebildet ist, daß in ihr eine Rückspülung des Siebelements erfolgen kann. Die Säuberungsstellung ist also eine Rückspülstellung, in der das Siebelement von dem durch das Anschlußelement strömenden Wasser in einer anderen Richtung durchströmt wird, so daß die im Filter zurückgehaltenen Teilchen weggespült werden können.

Das Siebelement kann beispielsweise in dem zu dem wasserdurchströmten Gerät führenden Teil untergebracht sein. Im oben erwähnten Beispiel könnte also das Siebelement in der Handbrause gehaltert sein, wenn die von der Erfindung vorgeschlagene Anschlußeinrichtung am Ende des Brauseschlauchs angeordnet ist. Diese Ausbildung hat den Vorteil, daß vorhandene Anschlußeinrichtungen nachgerüstet werden können.

Besonders günstig ist es jedoch, wenn das Siebelement in dem Anschlußelement selbst gehaltert ist.

In Weiterbildung der Erfindung kann vorgesehen sein, daß das Siebelement zwischen zwei die Siebstellung bzw. die Säuberungsstellung bildenden Extremstellungen verschiebbar gehaltert ist. In diesem Fall läßt sich das Siebelement sehr einfach ausbilden, vorzugsweise als einstückiger Körper.

In nochmaliger Weiterbildung der Erfindung kann vorgesehen sein, daß das Siebelement auswechselbar gehaltert ist. Diese Auswechselbarkeit bedeutet ebenfalls, daß das Siebelement nachträglich einsetzbar ist, was Vorteile bei dem Zusammenbau der Anschlußeinrichtung mit sich bringt.

Insbesondere kann erfindungsgemäß vorgesehen sein, daß die Siebfläche des Siebelements die Mantelfläche eines Zylinders, eines Quaders o. dgl. ist, die vorzugsweise von außen nach innen durchströmt wird. Es kann bei dieser Ausbildung dafür gesorgt werden, daß die eigentliche Siebfläche im Verhältnis zu der Querschnittsfläche der Wasserzuführung groß gestaltet wird, so daß die Gefahr eines schnellen Verstopfens beseitigt wird. Die Anordnung der Siebfläche an der Außenseite hat den Vorteil, daß diese in der Säuberungsstellung leicht zugänglich ist.

Insbesondere kann vorgesehen sein, daß das Siebelement eine Vielzahl von parallelen Stäben aufweist, deren Zwischenräume die Sieböffnungen bilden. Ein solches Siebelement läßt sich aus Kunststoff sehr einfach und sehr leicht durch Spritzgießen herstellen.

In Weiterbildung kann vorgesehen sein, daß die Stäbe an einem geschlossenen Ring einstückig angeformt sind. Dieser geschlossene Ring hält nicht nur die einzelnen Stäbe zusammen, sondern kann gleichzeitig als Führungs- und Anschlagelement dienen.

In Weiterbildung kann vorgesehen sein, daß die Stäbe an ihrem dem geschlossenen Ring abgewandten Ende radial nach außen und/oder nach innen gerichtete hakenartige Vorsprünge aufweisen. Diese Vorsprünge begrenzen die Verschiebebewegung des Siebelements von der Siebstellung in die Säuberungsstellung und umgekehrt. Sie können ebenfalls dazu dienen, durch ein Verbiegen der Stäbe von Hand ein Entriegeln des Siebelements und damit ein Herausnehmen des Siebelements zu ermöglichen.

Besonders günstig ist es, wenn die Anschlußeinrichtung mit einer Schnellkupplungseinrichtung versehen ist, damit der Vorteil der leichten Säuberung des Siebelements auch wahrgenommen werden kann.

Das erfindungsgemäße Anschlußelement kann insbesondere als Schraubnippel ausgebildet sein, der an dem Ende eines Brauseschlauchs anschraubbar ist.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: einen Längsschnitt durch eine Anschlußeinrichtung in Form eines Anschlußnippels für den Anschluß einer Handbrause;
- Fig. 2: eine teilweise geschnittene Seitenansicht des Anschlußelements der Fig. 1 in Säuberungsstellung.

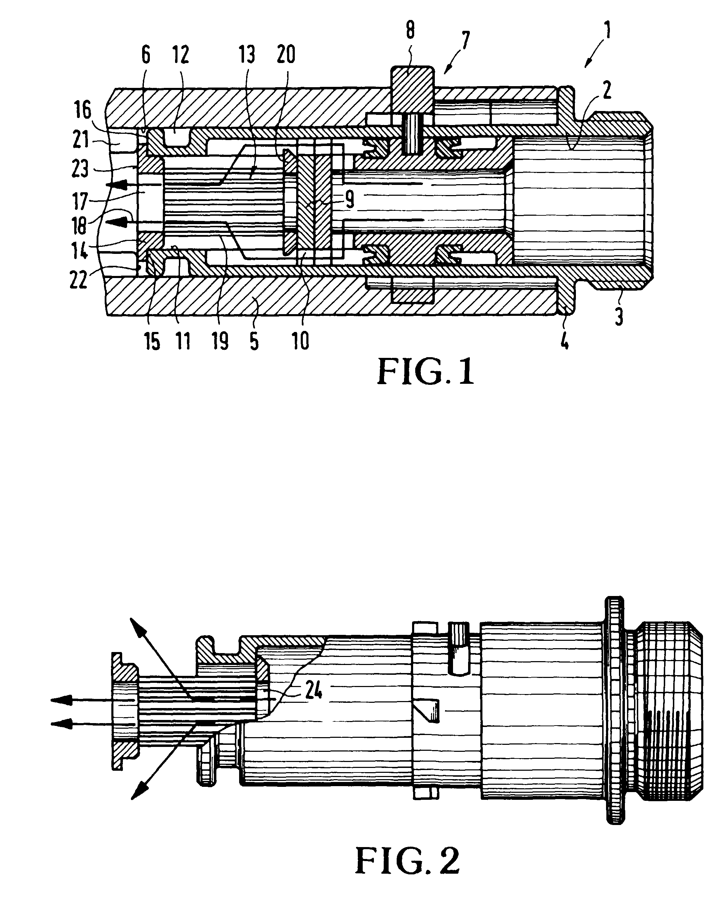

Fig. 1 zeigt im Längsschnitt eine Möglichkeit, wie die von der Erfindung vorgeschlagene Anschlußeinrichtung verwirklicht werden kann. Die Anschlußeinrichtung enthält ein Anschlußelement 1, das im dargestellten Beispiel ein Anschlußnippel 2 zum Anschluß an einen Brauseschlauch ist. Der Anschlußnippel 2 weist langgestreckte Kreiszylinerform auf und ist an seinem in Fig. 1 rechten Ende mit einem Außengewinde 3 für eine Überwurfmutter des Brauseschlauchs versehen. An das Außengewinde 3 schließt sich ein radialer Flansch 4 an, der gleichzeitig die Einsetztiefe in das Ende des Griffs 5 einer Handbrause bestimmt. Der Griff 5 ist nur in seinem Endbereich dargestellt. Er enthält eine zylindrische Innenbohrung 6, die zum Ende hin offen ist. Der Außendurchmesser des Anschlußnippels 2 entspricht dem Innendurchmesser dieser Innenbohrung 6, so daß der Anschlußnippel 2 mit geringem Spiel in die Innenbohrung 6 eingesetzt bzw. eingeschoben werden kann, bis der Flansch 4 am Ende des Handgriffs 5 zur Anlage kommt. Zur Festlegung des Anschlußnippels 2 in dem Griff 5 der Handbrause ist eine Schnellkupplung 7 vorgesehen, die mit einem Betätigungsgriff 8 geöffnet und geschlossen werden kann.

In dem Anschlußnippel 2 ist eine Querwand 9 gebildet, die im Bereich ihres Außenumfangs mehrere Durchtrittsöffnungen 10 für das durch den Anschlußnippel 2 strömende Wasser aufweist. Das Wasser kann die Querwand 9 also nur durch die Öffnungen 10 überwinden.

Im Bereich des dem Außengewinde 3 abgewandten Endes des Anschlußnippels 2 weist dieser eine im Durchmesser verringerte Öffnung 11 auf, an deren Außenseite eine umlaufende Ringnut 12 zum Einsetzen einer nicht dargestellten Dichtung vorgesehen ist.

Die Innenöffnung 11 weist Kreiszylinderform auf. In der Öffnung 11 ist ein Siebelement 13 verschiebbar gehaltert. Das Siebelement 13 weist an seinem dem freien Ende des Anschlußnippels 2 zugeordneten Ende ein Ringelement 14 auf, das eine äußere durch eine Stufe gebildete Schulter 15 enthält. Mit der Schulter 15 liegt das Ringelement 14 an der Stirnfläche 16 des Anschlußnippels 2 an. Das Ringelement weist eine zentrale Öffnung 17 auf, durch die das Wasser fließen kann, angedeutet durch die Pfeile 18.

An dem dem Ringelement 14 gegenüberliegenden Ende des Siebelements 13 liegt dieses mit einer Stirnfläche an der Querwand 9 an.

Da der Außendurchmesser des Siebelements 13, entsprechend dem Innendurchmesser der Öffnung 11, kleiner ist als der Innendurchmesser des Anschlußnippels 2 im Bereich zwischen der Öffnung 11 und der Querwand 9, kann das Wasser nur radial von außen nach innen durch das Siebelement 13 fließen. Das Siebelement 13 enthält einzelne an dem Ringelement 14 angeformte Stäbe 19, die alle parallel zueinander verlaufen und im Bereich ihres in das Innere des Anschlußnippels 2 gerichteten Endes mit hakenartigen radial nach außen vorspringenden Ansätzen 20 versehen sind. Alle Stäbe 19 verlaufen parallel zueinander und bilden zwischeneinander schmale Zwischenräume, die die Sieböffnungen des Siebelements 13 bilden.

An der Innenseite der Innenöffnung 6 des Brausegriffs 5 sind einzelne Vorsprünge 21 gebildet, deren zum äußeren Ende des Handgriffs 5 gerichtete Stirnflächen 22 an der äußeren Stirnfläche 23 des Ringelements 14 zur Anlage kommen. Das Ringelement 14 ist also mit seinem Außenflansch zwischen den Stirnflächen 22 der Vorsprünge 21 und der Stirnfläche des Anschlußnippels 2 unverschiebbar festgelegt. Die in Fig. 1 dargestellte Stellung, in der das Wasser nur radial von außen nach innen durch das Siebelement 13 in Richtung der Pfeile 18 fließen kann, ist die Siebstellung des Siebelements 13. Diese Siebstellung wird immer dann eingenommen, wenn das Anschlußelement 1 in dem Handgriff 5 der Brause eingesetzt und mit Hilfe der Schnellkupplungseinrichtung 7 gekuppelt ist. Eine Bewegung des Siebelements 13 ist in dieser Stellung nicht möglich. Etwaige im Wasser enthaltene Partikel bleiben an der Außenseite des Siebelements 13 hängen, während das Wasser durch den Zwischenraum zwischen den einzelnen Stäben 19 hindurchfließt.

Zum Lösen der Anschlußeinrichtung wird durch Verdrehen der Schnellkupplungseinrichtung 7 mit Hilfe des Betätigungsknopfs 8 die Schnellkupplungseinrichtung 7 gelöst. Dann kann der Brausegriff 5 von dem Anschlußelement 1 abgezogen werden. Wird nun nochmals kurz die Wasserzuführung zu dem Anschlußnippel 2 geöffnet, d. h. Wasserdruck in dem Anschlußnippel 2 aufgebaut, so verschiebt dieser Wasserdruck das Siebelement 13 aus der in Fig. 1 dargestellten Siebstellung nach außen in die in Fig. 2 dargestellte Säuberungsstellung. In dieser Säuberungsstellung ist das Siebelement 13 so weit verschoben, wie dies die hakenartigen Vorsprünge 20 am Ende der Stäbe 19 zulassen. Die Außenkanten der Vorsprünge 20 liegen auf einem Kreis, dessen Durchmesser größer ist als der Innendurchmesser der Öffnung 11. Mindestens einige der Stäbe 19 liegen mit ihren Außenseiten auf einem Kreis, dessen Durchmesser dem Innendurchmesser der Öffnung 11 gleich ist. Dadurch wird eine Führung erreicht. In der in Fig. 2 dargestellten Säuberungsstellung fließt das Wasser durch eine zentrale zwischen den Vorsprüngen 20 gebildete Öffnung 24 zum einen axial an der Innenseite der Stäbe 19 vorbei, zum anderen mindestens teilweise durch den Zwischenraum zwischen den Stäben 19 von innen nach außen. Dadurch können die dort festgehaltenen Partikel, falls sie nicht schon von allein abgefallen sind, abgespült werden. Der Übergang zwischen der in Fig. 1 dargestellten Siebstellung des Siebelements 13 und seiner in Fig. 2 dargestellten Säuberungsstellung kann, wenn man das Anschlußelement 1 mit seinem Siebelement 13 nach unten hält, unter dem Gewicht des Siebelements 13 von allein erfolgen. Ansonsten kann der Übergang durch Wiedereinschalten der Wasserzufuhr zu dem Anschlußnippel 2 bewirkt werden.

Die Überführung des Siebelements aus der Siebstellung in die Säuberungsstellung kann auch erfolgen, ohne daß der Benutzer etwas davon weiß. Das Siebelement kann auch durch leichtes Schütteln in die Säuberungsstellung überführt werden.

Zum Zurückführen des Siebelements aus der Säuberungsstellung in die Siebstellung braucht der Benutzer auch keine zusätzliche Maßnahme zu ergreifen, da beim Einstecken des Anschlußnippels 2 in den Griff 5 der Handbrause die Vorsprünge 21 das Siebelement 13 zurückschieben.

Während bei der dargestellten Ausführungsform das Siebelement 13 in dem Anschlußelement 1 gehaltert und geführt ist, also dem Teil, aus dem das Wasser austritt, ist es selbstverständlich auch möglich, das Siebelement 13 in dem wasserdurchströmten Gerät zu haltern und zu lagern, also im dargestellten Beispiel in dem Griff 5 der Handbrause. Auch in diesem Fall kann das Siebelement bei Lösen des Anschlusses durch Gewichtskraft oder mit Hilfe einer schwachen Feder in die Säuberungsstellung gebracht werden, in der dann allerdings keine automatische Rückspülung durch das Wasser erfolgt. Aber auch in diesem Fall können die durch das Siebelement 13 zurückgehaltenen Partikel, sofern sie nicht von alleine abfallen, von der Außenseite her entfernt werden, beispielsweise auch mit Hilfe eines aus dem Anschlußnippel 2 austretenden Wasserstrahls. Auch ein Abbürsten mit Hilfe einer Bürste ist möglich.

## Patentansprüche

1. Anschlusseinrichtung für ein wasserdurchströmtes Gerät mit einem mit einer Wasserzuführung verbundenen bzw. verbindbaren Anschlusselement (1), an dem das wasserdurchströmte Gerät direkt oder indirekt lösbar anschließbar ist, einem Siebelement (13), das eine Siebstellung, die es bei angeschlossenem Gerät einnimmt, und eine Säuberungsstellung aufweist, in der eine Säuberung des Siebelements (13) möglich ist, dadurch gekennzeichnet, dass bei angeschlossenem Gerät das Siebelement (13) in der Siebstellung unverschiebbar festgelegt ist und dass das Siebelement (13) nur bei nicht angeschlossenem Gerät in die Säuberungsstellung beaufschlagbar ist.

2. Anschlußeinrichtung nach Anspruch 1, bei der das Siebelement (13) durch sein Gewicht beaufschlagbar ist.

3. Anschlußeinrichtung nach Anspruch 1 oder 2, bei der das Siebelement durch Federkraft beaufschlagbar ist.

4. Anschlußeinrichtung nach einem der vorhergehenden Ansprüche, bei der das Siebelement (13) durch den Druck des durch das Anschlußelement (1) fließenden Wassers beaufschlagbar ist.

5. Anschlußeinrichtung nach einem der vorhergehenden Ansprüche, bei der die Säuberungsstellung des Siebelements (13) derart ausgebildet ist, daß in ihr eine Rückspülung erfolgt.

6. Anschlußeinrichtung nach einem der vorhergehenden Ansprüche, bei der das Siebelement (13) in dem Anschlußelement (1) gehaltert ist.

7. Anschlußeinrichtung nach einem der vorhergehenden Ansprüche, bei der das Siebelement (13) zwischen zwei die Siebstellung bzw. die Säuberungsstellung bildenden Extremstellungen verschiebbar gehaltert ist.

8. Anschlußeinrichtung nach einem der vorhergehenden Ansprüche, bei der das Siebelement (13) auswechselbar gehaltert ist.

9. Anschlußeinrichtung nach einem der vorhergehenden Ansprüche, bei der die Siebfläche des Siebelements (13) die Mantelfläche eines Zylinders, eines Quaders o. dgl. ist, die vorzugsweise von außen nach innen durchströmt wird.

10. Anschlußeinrichtung nach einem der vorhergehenden Ansprüche, bei der das Siebelement (13) eine Vielzahl von parallelen Stäben (19) aufweist, deren Zwischenräume die Sieböffnungen bilden.

11. Anschlußeinrichtung nach Anspruch 10, bei der die Stäbe (19) an einem geschlossenen Ringelement (14) einstückig angeformt sind.

12. Anschlußeinrichtung nach einem der Ansprüche 10 oder 11, bei der die Stäbe (19) an ihrem einen Ende radial nach außen und/oder nach innen gerichtete hakenartige Vorsprünge (20) aufweisen.

13. Anschlußeinrichtung nach einem der vorhergehenden Ansprüche, bei der das Anschlußelement (1) eine Schnellkupplungseinrichtung (7) für den Anschluß des Geräts aufweist.

14. Anschlußeinrichtung nach einem der vorhergehenden Ansprüche, bei der das Anschlußelement (1) einen mit dem Ende eines Brauseschlauchs verbindbaren Schraubnippel (2) aufweist.

15. Anschlußeinrichtung nach einem der Ansprüche 1 bis 12, bei der das Anschlußelement (1) ein Armaturenanschluß ist, insbesondere ein S-Anschluß, oder ein Anschlußstutzen für einen Brauseschlauch.

16. Anschlußeinrichtung nach einem der Ansprüche 1 bis 12, bei der das Anschlußelement (1) Teil eines Armaturenanschlußblocks ist.

17. Anschlußeinrichtung nach einem der Ansprüche 1 bis 12, bei der das wasserdurchströmte Gerät eine Brause, eine Sprühdüse, eine Sprühpistole o. dgl. ist.

18. Anschlußeinrichtung nach einem der Ansprüche 1 bis 16, bei der das wasserdurchströmte Gerät eine Sanitärarmatur, ein Mischventil, ein Thermostat oder dergleichen ist.

## Claims

1. Connecting arrangement for a water flowed-through device with a connecting element (1) connected or connectable to a water supply and to which is directly or indirectly detachably connectable the water flowed-through device, a screen element (13) having a screening position assumed when the device is connected, and a cleaning position in which a cleaning of the screen element (13) is possible, characterized in that when the device is connected the screen element (13) is fixed against sliding in the screening position and that the screen element (13) can only be urged into the cleaning position when the device is not connected.

2. Connecting arrangement according to claim 1, wherein the screen element (13) can be urged by its own weight.

3. Connecting arrangement according to claim 1 or 2, wherein the screen element can be urged by spring tension.

4. Connecting arrangement according to one of the preceding claims, wherein the screen element (13) can be urged by the pressure of the water flowing through the connecting element (1).

5. Connecting arrangement according to one of the preceding claims, wherein the cleaning position of the screen element (13) is constructed in such a way that back flushing occurs therein.

6. Connecting arrangement according to one of the preceding claims, wherein the screen element (13) is mounted in the connecting element (1).

7. Connecting arrangement according to one of the preceding claims, wherein the screen element (13) is slidably mounted between two extreme positions forming the screening position and the cleaning position.

8. Connecting arrangement according to one of the preceding claims, wherein the screen element (13) is replaceably mounted.

9. Connecting arrangement according to one of the preceding claims, wherein the screen area of the screen element (13) is the circumferential surface of a cylinder, a parallelepiped, etc. through which there is preferably a flow from the outside to the inside.

10. Connecting arrangement according to one of the preceding claims, wherein the screen element (13) has a plurality of parallel bars (19), whose gaps form the screen openings.

11. Connecting arrangement according to claim 10, wherein the bars (19) are shaped in one piece on a closed ring element (14).

12. Connecting arrangement according to one of the claims 10 or 11, wherein, at one end, the bars (19) have radially outwardly and/or inwardly directed hook-like projections (20).

13. Connecting arrangement according to one of the preceding claims, wherein the connecting element (1) has a quick coupler (7) for the connection of the device.

14. Connecting arrangement according to one of the preceding claims, wherein the connecting element (1) has a screw nipple (2) connectable to the end of a shower hose.

15. Connecting arrangement according to one of the claims 1 to 12, wherein the connecting element (1) is a fitting connection, particularly a S-connection, or a connecting socket for a shower hose.

16. Connecting arrangement according to one of the claims 1 to 12, wherein the connecting element (1) is part of a fitting connection block.

17. Connecting arrangement according to one of the claims 1 to 12, wherein the water flowed-through device is a shower, a spraying nozzle, a spray gun, etc.

18. Connecting arrangement according to one of the claims 1 to 16, wherein the water flowed-through device is a sanitary fitting, a mixer valve, a thermostat, etc.

## Revendications

1. Dispositif de connexion pour un appareil traversé par de l'eau avec un élément de connexion (1) reliable ou relié à une amenée d'eau, élément auquel l'appareil traversé par de l'eau peut être connecté directement ou indirectement de manière amovible, avec un élément filtre (13) qui présente une position de filtre que l'élément filtre prend quand l'appareil est raccordé, et une position de nettoyage dans laquelle un nettoyage de l'élément filtre (13) est possible, caractérisé en ce qu'en cas d'appareil raccordé, l'élément filtre (13) est fixé de manière inamovible en position de filtre et que l'élément filtre (13) ne peut subir un impact que quand l'appareil n'est pas raccordé, en position de nettoyage.

2. Dispositif de connexion selon la revendication 1 ou 2, où l'élément de filtre (13) peut subir un impact par son poids.

3. Dispositif de connexion selon la revendication 1, où l'élément de filtre (13) peut subir un impact par sa force de ressort.

4. Dispositif de connexion selon l'une des revendications précédentes, où l'élément filtre (13) peut subir l'impact de la pression de l'eau s'écoulant à travers l'élément de connexion (1).

5. Dispositif de connexion selon l'une des revendications précédentes, où la position de nettoyage de l'élément filtre (13) est prévu pour permettre un refoulement dans son intérieur.

6. Dispositif de connexion selon l'une des revendications précédentes, où l'élément filtre (13) est maintenu dans l'élément de connexion (1).

7. Dispositif de connexion selon l'une des revendications précédentes, où l'élément de filtre (13) est maintenu de manière mobile entre deux positions extrêmes formant la position de filtre et la position de nettoyage.

8. Dispositif de connexion selon l'une des revendications précédentes, où l'élément de filtre (13) est maintenu de manière interchangeable.

9. Dispositif de connexion selon l'une des revendications précédentes, où la surface de filtre de l'élément de filtre (13) est la surface d'enveloppe d'un cylindre, d'un carré ou similaire, laquelle est traversée de préférence de l'extérieur vers l'intérieur.

10. Dispositif de connexion selon l'une des revendications précédentes, où l'élément de filtre (13) présente un grand nombre de broches parallèles (19) dont les espaces forment les ouvertures de filtre.

11. Dispositif de connexion selon la revendication 10, caractérisé en ce que les broches (19) sont moulées d'une seule pièce sur un élément annulaire fermé (14) .

12. Dispositif de connexion selon l'une des revendications 10 ou 11 où les broches (19) présentent sur l'une de leurs extrémités des saillies (20) formant crochet dirigées vers l'intérieur et/ou l'extérieur.

13. Dispositif de connexion selon l'une des revendications précédentes, où l'élément de connexion (1) présente un dispositif d'accouplement rapide (7) pour le raccordement de l'appareil.

14. Dispositif de connexion selon l'une des revendications précédentes, où l'élément de connexion (1) présente une nipple filetée (2) reliable à l'extrémité d'un tuyau de douche.

15. Dispositif de connexion selon l'une des revendications 1 à 12, où l'élément de connexion (1) est un raccord de robinetterie, en particulier un raccord en S ou une tubulure de raccordement pour un tuyau de douche.

16. Dispositif de connexion selon l'une des revendications 1 à 12, où l'élément de connexion (1) est une partie d'un raccord de robinetterie.

17. Dispositif de connexion selon l'une des revendications 1 à 12, où l'appareil traversé par de l'eau est une douche, une buse d'aspersion, un pistolet d'aspersion ou similaire etc.

18. Dispositif de connexion selon l'une des revendications 1 à 16, où l'appareil traversé par l'eau est une robinetterie de sanitaire, un robinet mélangeur, un thermostat ou similaire.
